# EUROPEAN PATENT SPECIFICATION

(11) **EP 1 125 485 B1**
(45) Date of publication and mention of the grant of the patent: **01.10.2003**
(21) Application number: 01200483.4
(22) Date of filing: 09.02.2001
(51) Int. Cl.: A01B 33/02

(54) **Hand-manoeuvred power cultivator**
Handgeführte Bodenfräse
Cultivateur pour le sol, guidé à main

(30) Priority: 11.02.2000 IT RE000004 U
(43) Date of publication of application: 22.08.2001
(73) Proprietor: Carboni, Renzo, 42022 Boretto (Reggio Emilia) (IT)
(72) Inventor: Carboni, Renzo, 42022 Boretto (Reggio Emilia) (IT)
(74) Representative: Corradini, Corrado

(56) References cited:
- FR-A- 2 689 363
- FR-A- 2 703 876
- GB-A- 837 158

## Description

This invention relates to improvements in two-wheeled agricultural power machines according to the preamble of claim 1, a typical but not exclusive use of which is in hand-manoeuvred power cultivators.

In particular, the invention relates to those power cultivators having working units which project away from the wheel axle, such as power hoes.

As is well known, said power hoes comprise, inter alia, a cutter unit which is usually positioned behind the machine drive wheels, and in front of levelling and compacting means for the crushed soil.

The engine projects to the front of the machine axle.

The said cutter unit is fixed by a front flange to the rear of the gearbox, which itself is flanged to the casing of the engine unit.

As the members associated with the cutter unit have a considerable overall weight, in the known art a counter-weight is associated with the front end of the machine, to enable the operator to manoeuvre the machine without excessive force and to easily adjust the working depth of the cutter unit.

The purpose of said counter-weight is to maintain the force exerted on the handlebar to raise the machine of the order of about 20 kg.

In particular, the counter-weight is fixed by bolts to the front of and projecting from the crankcase of the engine unit.

A problem connected with such a balancing system derives from the fact that the weight of the cutter unit generates a considerable bending moment which discharges onto the flange which connects that unit to the gearbox, resulting in serious risks of fracture.

This is aggravated by the fact that said bending moment is not constant with time, but varies considerably depending on the running speed and ground conditions, and by the presence of inevitable vibration.

Consider for example the working conditions of a power hoe which, besides hoeing the ground, also tends to bury stones, shrubs and other material present thereon.

Totally similar problems, and consequent danger of breakage, also exist at the flanged joint between the gearbox and the engine unit, and also at the point of connection of the counter-weight to the engine crankcase.

In this respect, stresses due to the opposing action of the counter-weight and of the cutter unit about the machine axle act on said flanged joint, and stresses due to the projecting fixing of the counter-weights to the engine crankcase act on said connection point.

The main object of the present invention is to obviate the aforesaid within the context of a simple, rational, reliable and low-cost construction.

Said object is attained by virtue of the characteristics defined in claim 1. Further developpements of the invention are described in the dependent claims.

To attain said object, according to the invention the machine is provided with at least one arm which at one end is connected to the structure of the cutter unit, and at its other end extends beyond the wheel axle, where it carries a balancing ballast.

By virtue of the aforestated solution, which is described in detail hereinafter, the problems described in the introduction are overcome.

In this respect, by way of said at least one arm, said ballast generates a bending moment of opposite sign and of substantially equal value to that generated by the cutter unit both on the flanged joint provided between this latter and the gearbox, and on the flanged joint provided between the gearbox and the engine crankcase.

Because of this, the connection flange between the cutter unit and engine is subjected mainly to shear stresses, which can be counteracted by simple shouldering.

Those stresses which in the known art act on the engine crankcase by virtue of the counter-weight fixed thereto are also eliminated.

The merits and constructional characteristics of the invention will be apparent from the ensuing detailed description, given with reference to the figures of the accompanying drawings, in which:

Figure 1 is a side elevation of a power hoe according to the invention.

Figure 2 is a view of the preceding figure from above.

Figure 3 is a section on the line III-III of Figure 1.

Said figures show a power hoe, the structure of which is equal overall to that of a known machine.

Essentially, it comprises an internal combustion engine 2 with a rear gearbox 3, and comprising two projecting axles which carry the drive wheels 1; a cutter unit 4 driven by said gearbox 3, with rear stone protection grid 5; an intermediate levelling blade 9; a rear compacting roller 6; a manoeuvring handlebar 7; and a casing 8 which encloses said cutter unit 4 and said grid 5, all of usual type.

Said casing 8 is hinged to the structure of the cutter unit 4 by the transverse horizontal shaft 88, convenient mutual locking means being interposed between said two elements 4 and 8.

The cutter unit 4 is also fixed to the gearbox 3 by the flanged joint indicated by 10.

According to the invention, on one and the other side of the longitudinal plane of symmetry of the machine there are provided two channel bars 11 which are fixed to opposite ends of the front transverse wall of the casing 8.

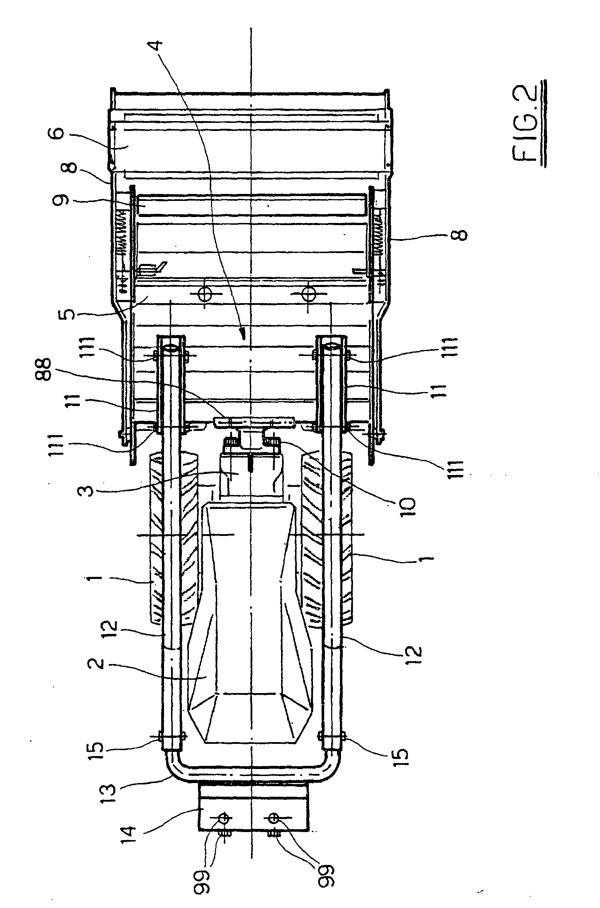

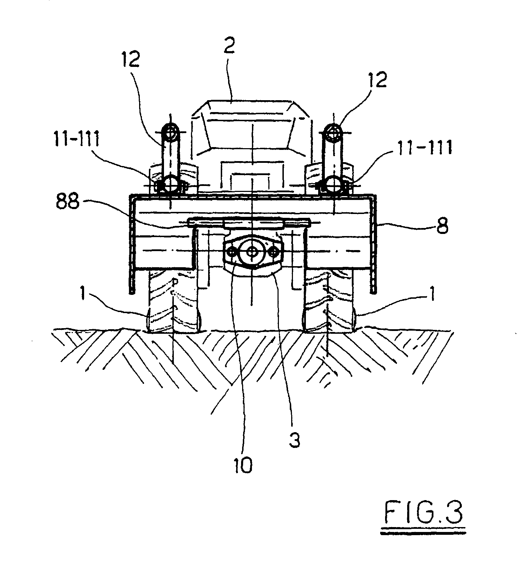

Said channel bars 11 are aligned with the wheels 1 (see Figures 2 and 3), to receive in their interior the rear ends of two identical profiled arms 12 which extend beyond the front end of the engine 2.

In particular, each individual arm 12 is removably fixed to the respective channel bar 11 by transverse catches indicated by 111, in order to enable the casing 8 to be moved for adjustment, control and maintenance operations.

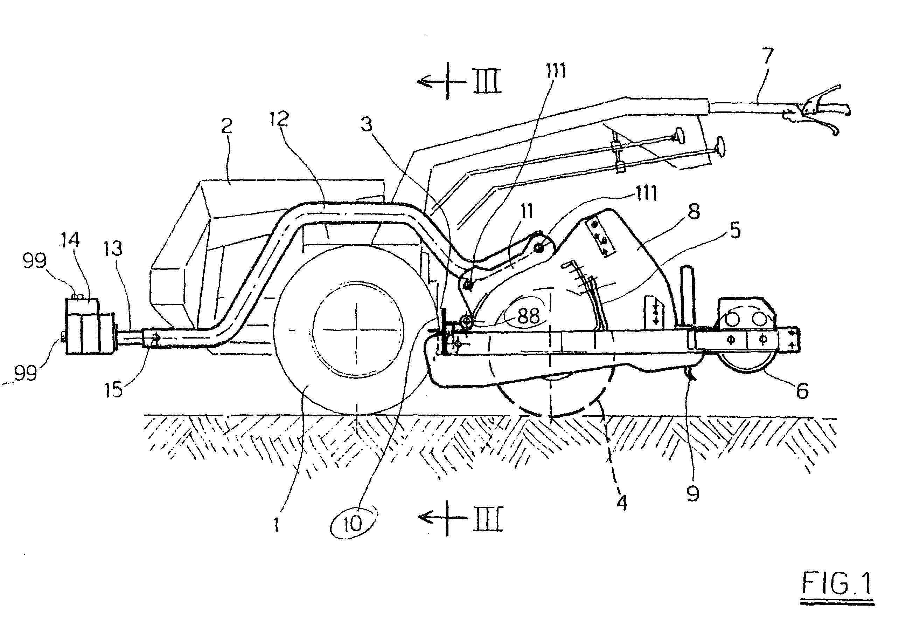

In the figures the arms 12 each consist of a piece of tubing of circular cross-section bent to assume, in side view (see Figure 1), an "omega" shape with its concavity matching the shape of the respective underlying wheel 1.

As can be seen, the front end of each arm 12 consists of a straight portion which slidingly receives a respective arm of a fork-shaped front member 13.

The front ends of the arms 13 are provided with screws 15 for adjusting the longitudinal position of said fork-shaped member 13.

Finally, on the crosspiece of this latter there is centrally positioned a ballast 14 comprising a series of blocks held together by threaded means 99.

The merits and advantages of the invention are apparent from the aforegoing and from an examination of the accompanying figures.

## Claims

1. A hand-manoeuvred power cultivator, such as a power hoe comprising a cutter unit (4) which is positioned projecting rearwards of the axle of the drive wheels (1), is fixed by a flanged joint (10) to the gearbox (3) of the machine engine (2), and is balanced by counter-weight means, **characterised in that** said counter-weight means comprise at least one arm (12) which at one end is connected to the structure of said cutter unit, and at its other end extends beyond the machine axle, where it supports a balancing ballast (14).

2. A power cultivator as claimed in claim 1, **characterised in that** said at least one arm (12) is removably fixed to said structure.

3. A power cultivator as claimed in claim 2, **characterised in that** said at least one arm (12) comprises two elements which are positioned along the sides of the machine and have their front ends connected together by a crosspiece (13) which carries said ballast (14).

4. A power cultivator as claimed in claim 3, **characterised in that** each of said elements has, in side view, a curved profile matching that of the underlying drive wheel (1).

5. A power cultivator as claimed in claim 3, **characterised in that** said crosspiece (13) is positioned in front of the machine engine (2).

6. A power cultivator as claimed in claim 3, **characterised in that** said crosspiece (13) is adjustable along said elements.

7. A power cultivator as claimed in claim 1, **characterised in that** said ballast (14) comprises a series of weights removably connected to said crosspiece (13).

8. A balancing system for two-wheeled power cultivators provided with a working unit positioned projecting rearwards of the axis of said two wheels (1), **characterised by** being formed in accordance with claims 1 to 7.

## Patentansprüche

1. Handgeführte Motorfräse, wie zum Beispiel eine motorgetriebene Hacke, welche eine Schneideinheit (4) aufweist, welche so angeordnet ist, dass sie von der Achse der Antriebsräder (1) nach hinten übersteht, und welche mittels einer Flanschverbindung (10) an dem Getriebe (3) des Maschinenmotors (2) befestigt und mittels einer Ausgleichsgewichteinrichtung ausgewuchtet bzw. ausgeglichen ist,
**dadurch gekennzeichnet, dass**
die Ausgleichsgewichteinrichtung wenigstens einen Arm (12) aufweist, welcher an einem Ende mit der Struktur der Schneideinheit verbunden ist und sich an seinem anderen Ende über die Maschinenachse erstreckt, wo er einen Ausgleichsballast (14) trägt.

2. Motorfräse nach Anspruch 1,
**dadurch gekennzeichnet, dass**
der wenigstens eine Arm (12) abnehmbar an der Struktur befestigt ist.

3. Motorfräse nach Anspruch 2,
**dadurch gekennzeichnet, dass**
der wenigstens eine Arm (12) zwei Elemente aufweist, welche entlang der Seiten der Maschine angeordnet sind und deren vordere Enden mittels eines Querelements (13) verbunden sind, welches den Ballast (14) trägt.

4. Motorfräse nach Anspruch 3,
**dadurch gekennzeichnet, dass**
jedes der Elemente in der Seitenansicht ein kurvenförmiges Profil aufweist, welches dem des darunter liegenden Antriebrads (1) entspricht.

5. Motorfräse nach Anspruch 3,
**dadurch gekennzeichnet, dass**
das Querelement (13) vor dem Maschinenmotor (2) angeordnet ist.

6. Motorfräse nach Anspruch 3,
**dadurch gekennzeichnet, dass**
das Querelement (13) entlang der Elemente einstellbar ist.

7. Motorfräse nach Anspruch 1,
**dadurch gekennzeichnet, dass**
der Ballast (14) eine Reihe von Gewichten aufweist, welche entfernbar mit dem Querelement (13) verbunden sind.

8. Ausgleichssystem für zweirädrige Motorfräsen, welche mit einer Arbeitseinheit versehen sind, welche so angeordnet ist, dass sie sich von der Achse der zwei Räder (1) nach hinten erstreckt,
**dadurch gekennzeichnet, dass**
es gemäß den Ansprüchen 1 bis 7 ausgebildet ist.

## Revendications

1. Cultivateur à moteur manoeuvré à la main, tel qu'une houe à moteur, comprenant une unité (4) à organe de coupe disposée afin qu'elle dépasse en arrière de l'essieu des roues motrices (1), qui est fixée par un joint à bride (10) à la boîte de vitesses (3) du moteur (2) de la machine, et qui est équilibrée par un contrepoids, **caractérisé en ce que** le contrepoids comporte au moins un bras (12) qui, à une première extrémité, est raccordé à la structure de l'unité à organe de coupe et, à l'autre extrémité, s'étend au-delà de l'essieu de la machine à l'endroit où il supporte un lest d'équilibrage (14).

2. Cultivateur à moteur selon la revendication 1, **caractérisé en ce que** le bras au moins (12) est fixé de façon amovible à la structure.

3. Cultivateur à moteur selon la revendication 2, **caractérisé en ce qu'**un bras au moins (12) comprend deux éléments qui sont positionnés le long des côtés de la machine et dont les extrémités avant sont raccordées par une traverse (13) qui porte le lest (14).

4. Cultivateur à moteur selon la revendication 3, **caractérisé en ce que** chacun des éléments a, en élévation latérale, un profil courbe correspondant à celui de la roue motrice (1) placée au-dessous.

5. Cultivateur à moteur selon la revendication 3, **caractérisé en ce que** la traverse (13) est disposée en avant du moteur (2) de la machine.

6. Cultivateur à moteur selon la revendication 3, **caractérisé en ce que** la traverse (13) et réglable le long des éléments.

7. Cultivateur à moteur selon la revendication 1, **caractérisé en ce que** le lest (14) comprend une série de poids raccordés de façon amovible à la traverse (13).

8. Système d'équilibrage pour cultivateur à moteur à deux roues ayant une unité de travail disposée afin qu'elle dépasse en arrière de l'axe des deux roues (1), **caractérisé en ce qu'**il est formé selon les revendications 1 à 7.
